# EUROPEAN PATENT APPLICATION

(11) **EP 3 913 554 A1**
(43) Date of publication of application: **24.11.2021**
(21) Application number: 19910069.4
(22) Date of filing: 19.06.2019
(51) Int. Cl.: G06Q 10/04

(54) **PICKUP REMINDING METHOD, DEVICE AND EQUIPMENT, AND STORAGE MEDIUM**

(30) Priority: 15.01.2019 CN 201910036046
(71) Applicant: Shenzhen Hive Box Technology Co., Ltd, Shenzhen, Guangdong 518000 (CN)
(72) Inventor: LI, Wenqing, Shenzhen, Guangdong 518000 (CN); MA, Haiyan, Shenzhen, Guangdong 518000 (CN)
(74) Representative: Cabinet Beaumont
(86) International application number: PCT/CN2019/091824
(87) International publication number: WO 2020/147261

(57) **Abstract**

Provided are a pickup reminding method and apparatus, a device, and a storage medium. The method includes acquiring (110) pickup behavior data of a plurality of users and generating predicted pickup time of the plurality of users according to the pickup behavior data; after receiving a notification that a parcel of a target user is delivered into a target delivery locker, sending (120) a pickup notification to the target user; and if it is determined that the target user does not pick up the parcel within standard pickup waiting time, sending (130) a corresponding pickup reminding notification to the target user according to predicted pickup time of the target user and/or a monitoring result of the target user in an area where the target delivery locker is located.

## Description

This application claims priority to Chinese Patent Application No. 201910036046.1 filed with the CNIPA on Jan. 15, 2019, the disclosure of which is incorporated herein by reference in its entirety.

### TECHNICAL FIELD

Embodiments of the present invention relate to the field of delivery technologies, for example, a pickup reminding method and apparatus, a device, and a storage medium.

### BACKGROUND

With the rapid development of e-commerce and the accelerating pace of people's lives, the number of parcels is increasing. At present, a courier sends a pickup notification to a user after delivering the parcel into a locker. If the user does not pick up the parcel, a pickup reminder is sent 24 hours after the notification time. If the parcel is still not picked up, the pickup reminder is resent 48 hours after the notification time.

This related method in which the pickup reminder is sent 24 hours and 48 hours after the time when the courier delivers the parcel into the locker is not convenient enough for the user. If the pickup reminder is pushed too early, the user needs to repeatedly check and read pickup notification information and even forgets to pick up the parcel. If the pickup reminder is pushed too late, the user has already arrived home (or company and other places) and needs to go to a delivery locker to pick up the parcel and sometimes even picks up the parcel on the next day, resulting in the retention time of the parcel in the delivery locker to be too long, and the utilization efficiency of grids is reduced.

### SUMMARY

Embodiments of the present invention provide a pickup reminding method and apparatus, a device, and a storage medium, so as to effectively remind a user to pick up a parcel in time and improve the utilization rate of grids.

In a first aspect, embodiments of the present invention provide a pickup reminding method. The method includes steps described below.

Pickup behavior data of a plurality of users is acquired and predicted pickup time of the plurality of users is generated according to the pickup behavior data.

After a notification that a parcel of a target user is delivered into a target delivery locker is received, a pickup notification is sent to the target user.

In response to determining that the target user does not pick up the parcel within standard pickup waiting time, a pickup reminding notification is sent to the target user according to at least one of predicted pickup time of the target user and a monitoring result of the target user in an area where the target delivery locker is located.

In a second aspect, embodiments of the present invention further provide a pickup reminding apparatus. The apparatus includes a predicted pickup time generation module, a pickup notification sending module, and a reminding notification sending module.

The predicted pickup time generation module is configured to acquire pickup behavior data of a plurality of users and generate predicted pickup time of the plurality of users according to the pickup behavior data.

The pickup notification sending module is configured to send a pickup notification to the target user after receiving a notification that a parcel of a target user is delivered into a target delivery locker.

The reminding notification sending module is configured to, in response to determining that the target user does not pick up the parcel within standard pickup waiting time, send a corresponding pickup reminding notification to the target user according to at least one of predicted pickup time of the target user and a monitoring result of the target user in an area where the target delivery locker is located.

In a third aspect, embodiments of the present invention further provide a computer device. The computer device includes a memory, a processor, and a computer program stored in the memory and executable by the processor, where the processor executes the computer program to implement the pickup reminding method of any one of the embodiments of the present application.

In a fourth aspect, embodiments of the present invention provide a computer-readable storage medium storing a computer program, where the computer program is configured to, when executed by a processer, implement the pickup reminding method of any one of the embodiments of the present application.

In embodiments of the present invention, the predicted pickup time of the plurality of users is generated according to the pickup behavior data of the plurality of users, and in the case where the user does not pick up the parcel within the standard waiting time, the corresponding pickup reminding notification is sent to the user according to the predicted pickup time of the user and/or the monitoring result of the user in the area where the target delivery locker is located. In this manner, the following problem in the related art is solved: the pickup reminding notification is sent according to the time when the parcel is delivered into the delivery locker, causing the retention time of the parcel in the delivery locker to be too long, thereby causing the relatively low utilization rate of delivery locker grids; and the user is effectively reminded to pick up the parcel in time and thus the utilization efficiency of the grids is improved.

### BRIEF DESCRIPTION OF DRAWINGS

FIG. 1 is a flowchart of a pickup reminding method according to embodiment one of the present invention;
FIG. 2A is a flowchart of a pickup reminding method according to embodiment two of the present invention;
FIG. 2B is another flowchart of the pickup reminding method according to embodiment two of the present invention;
FIG. 3 is a structure diagram of a pickup reminding apparatus according to embodiment three of the present invention; and
FIG. 4 is a structure diagram of a computer device according to embodiment four of the present invention.

### DETAILED DESCRIPTION

The present application is further described in detail hereinafter in conjunction with the drawings and embodiments. It is to be understood that the embodiments described herein are intended to illustrate and not to limit the present application. It is to be noted that to facilitate description, only part, not all, of structures related to the present application are illustrated in the drawings.

### Embodiment one

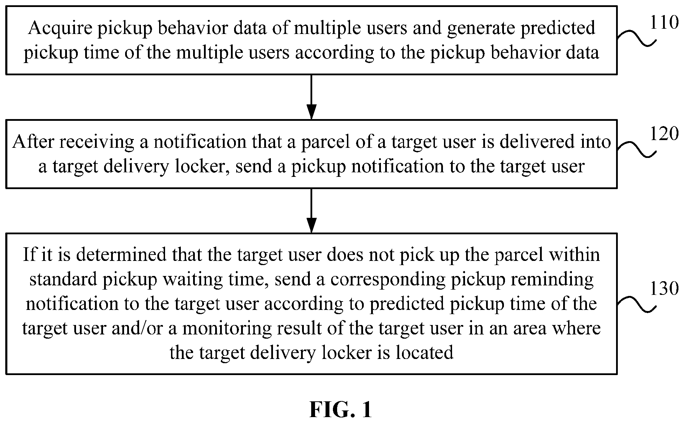

FIG. 1 is a flowchart of a pickup reminding method according to embodiment one of the present invention. This embodiment may be suitable for the case where a user is reminded to pick up a parcel. The method may be executed by a pickup reminding apparatus. The apparatus may be implemented by software and/or hardware and generally be integrated in various servers that provide pickup reminder services for the user. Specifically, referring to FIG. 1, the method may include steps 110, 120 and 130 described below.

In step 110, pickup behavior data of multiple users is acquired and predicted pickup time of the multiple users is generated according to the pickup behavior data.

To avoid the problem of unreasonable sending time of the pickup reminding notification which causes the user to forget or miss the pickup, in embodiments of the present invention, the pickup behavior data of users is analyzed, common pickup time of a user is obtained, and a pickup reminding notification is sent to the user within a relatively short time period before the common pickup time so that the user can pick up the parcel in time.

In an embodiment, a server acquires daily pickup behavior data of multiple users and analyzes the pickup behavior data to obtain the predicted pickup time of the multiple users. The predicted pickup time generally refers to the time when a user is free and convenient. For example, before work in the morning, at lunch break at noon, and after getting off work in the evening, a user is more likely to pick up the parcel at the predicted pickup time. Therefore, the pickup reminding notification is sent by using the predicted pickup time as reference time so that the possibility of the retention of the parcel in the delivery locker can be reduced.

In an embodiment, the step of acquiring the pickup behavior data of the multiple users and generating the predicted pickup time of the multiple users according to the pickup behavior data may include presetting multiple candidate time points for the predicted pickup time, extracting pickup time in the pickup behavior data of the multiple users, and respectively adding the pickup time to corresponding candidate time points; and counting numbers of times of pickup corresponding to the multiple candidate time points and selecting one of the multiple candidate time points corresponding to a maximum number of times of pickup as the predicted pickup time; where if the maximum number of times of pickup corresponds to multiple candidate time points, one of the multiple candidate time points corresponding to the maximum number of times of pickup is randomly selected as the predicted pickup time.

Exemplarily, a total of 16 candidate time points are preset from 7 o'clock to 22 o'clock, a total of 55 pickup time in the pickup behavior data of user A is acquired, and each pickup time is matched to the closest candidate time point, and the number of times of pickup at the closest candidate time point is increased by 1. For example, if the pickup time of the user is 13:05, the matched candidate time point is 13 o'clock, the pickup time 13:05 is added to a pickup time set corresponding to the candidate time point 13 o'clock. After all pickup time of the user is matching to the candidate time points, numbers of pickup time in pickup time sets corresponding to multiple candidate time points are counted, and a candidate time point corresponding to the maximum number of times of pickup is selected as the predicted pickup time of the user.

In an embodiment, the selected predicted pickup time needs to be checked for validity, that is, the maximum number of times of pickup corresponding to the predicted pickup time is compared with a threshold of times of pickup. If the maximum number of times of pickup is greater than the threshold of times of pickup, it is determined that the selected predicted pickup time is valid. The threshold of times of pickup may be 30, 35, or other values, and the threshold of times of pickup may be manually adjusted as needed.

In an embodiment, the predicted pickup time of the user is not fixed, since the more the number of times of pickup is, the more accurate the predicted pickup time of the user is. Therefore, the pickup behavior data of the user is generally a pickup log of the user in the past year, that is, the predicted pickup time of the user is constantly updated as the number of times of pickup of the user increases.

In step 120, after a notification that a parcel of a target user is delivered into a target delivery locker is received, a pickup notification is sent to the target user.

In embodiments of the present invention, a notification that the parcel of the target user is delivered into the target delivery locker is sent to the server after a courier delivers the parcel of the target user into the delivery locker. After receiving the notification, the server acquires contact information of the target user and immediately sends the corresponding pickup notification to the target user to inform the target user of the location of the target delivery locker where the parcel of the target user is stored, an express company to which the parcel belongs, a pickup code, etc., and the user is reminded to go to the target delivery locker in time for pickup.

In step 130, if it is determined that the target user does not pick up the parcel within standard pickup waiting time, a corresponding pickup reminding notification is sent to the target user according to at least one of predicted pickup time of the target user and a monitoring result of the target user in an area where the target delivery locker is located.

After the server sends the pickup notification to the target user, if the target user does not pick up the parcel within the standard pickup waiting time, the pickup reminding notification needs to be sent to the user to remind the user to pick up the parcel in the target delivery locker in time so that the retention time of the parcel in the target delivery locker is reduced and the utilization rate of target delivery locker grids is improved. The standard pickup waiting time may generally be set to half an hour or may also be set to other time lengths. To play an effective reminding function, in embodiments of the present invention, the corresponding pickup reminding notification is sent to the target user according to the predicted pickup time of the target user and/or the monitoring result of the target user in the area where the target delivery locker is located.

In an embodiment, the monitoring result of the target user in the area where the target delivery locker is located includes an access control recognition entry record of the target user monitored by an access control system matching the area where the target delivery locker is located and/or a license plate recognition entry record of the target user monitored by a license plate monitoring system matching the area where the target delivery locker is located.

In an embodiment, whether the target user enters the area where the delivery locker is located is determined by using a surveillance camera.

In an embodiment, the step of sending the corresponding pickup reminding notification to the target user according to the predicted pickup time of the target user and/or the monitoring result of the target user in the area where the target delivery locker is located may include the steps described below. After the target user does not pick up the parcel within the standard pickup waiting time, the server acquires the predicted pickup time of the target user and acquires monitoring time between which and the predicted pickup time target waiting time exists, and the monitoring time is before the predicted pickup time. The length of the target waiting time is generally relatively short. The object of setting this time is to remind the user of the pickup within a relatively short time period before the common pickup time of the user to strengthen the user's memory for pickup. Therefore, the target waiting time may be set to 15 minutes or other relatively short time lengths. The monitoring time refers to a deadline for the server to send the pickup reminding notification to the target user before the predicted pickup time, that is, if the access control system monitors the access control recognition entry record of the target user and/or the license plate monitoring system monitors the license plate recognition entry record before the monitoring time, the pickup reminding notification is sent to the target user when the recognition record is monitored; and if the access control system does not monitor the access control recognition entry record of the target user and the license plate monitoring system does not monitor the license plate recognition entry record before the monitoring time, the pickup reminding notification is sent to the target user at the monitoring time.

In an embodiment, when the license plate monitoring system monitors the license plate recognition entry record, the server controls the license plate monitoring system to voice-broadcast the pickup reminding notification to the target user and at the same time, sends a message that the license plate recognition entry record is monitored to the server so that the server sends the pickup reminding notification to the target user in the form of WeChat push or short message. When the access control system monitors the access control recognition entry record of the target user, the access control system notifies the server that the target user has entered the area where the target delivery locker is located through the access control recognition, and after receiving the notification, the server sends the pickup reminding notification to the target user to remind the user to pick up the parcel in time before the user gets home.

In technical solutions of the embodiments of the present invention, the predicted pickup time of multiple users is generated according to the pickup behavior data of the multiple users, and in the case where the user does not pick up the parcel within the standard waiting time, the corresponding pickup reminding notification is sent to the user according to the predicted pickup time of the user and/or the monitoring result of the user in the area where the target delivery locker is located. In this manner, the following problem in the related art is solved: the pickup reminding notification is sent according to the time when the parcel is delivered into the delivery locker, causing the retention time of the parcel in the delivery locker to be too long, thereby causing the relatively low utilization rate of the delivery locker grids; and the user is effectively reminded to pick up the parcel in time and thus the utilization efficiency of the grids is improved.

### Embodiment two

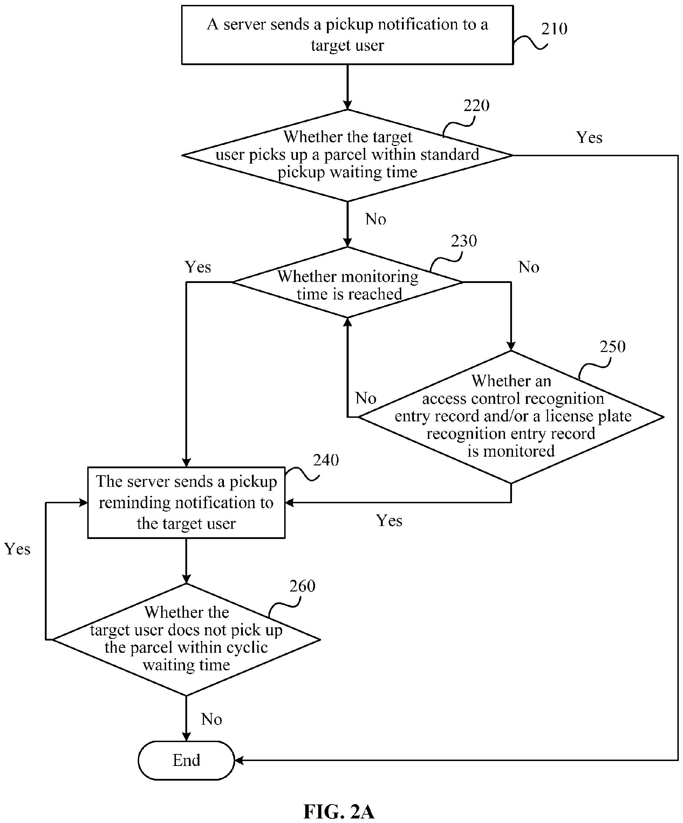

FIG. 2A is a flowchart of a pickup reminding method according to embodiment two of the present invention. Embodiments of the present invention may be combined with each alternative solution in one or more of the preceding embodiments. As shown in FIG. 2A, the method includes steps 210 to 260.

In step 210, a server sends a pickup notification to a target user.

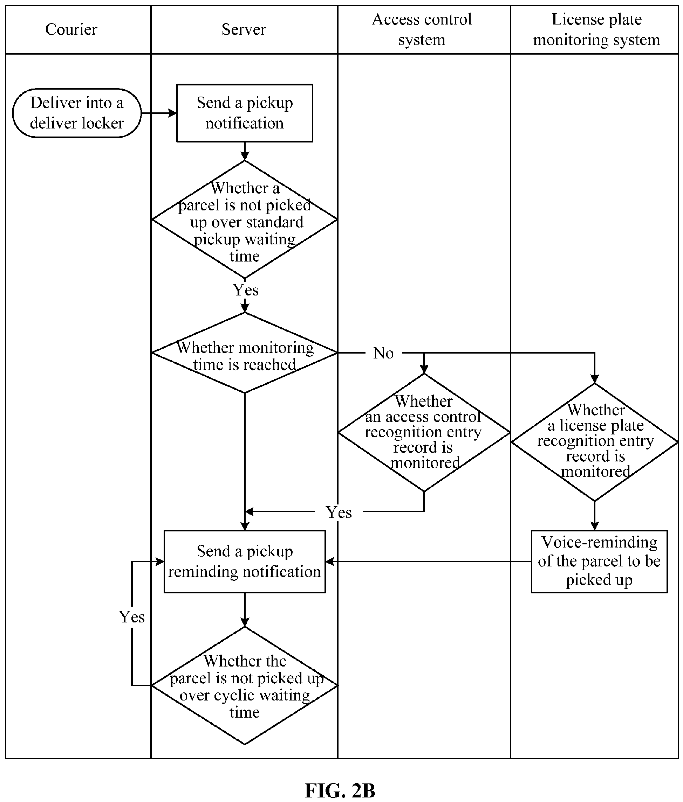

As shown in FIG. 2B, in embodiments of the present invention, after receiving a notification sent by a courier that a parcel of the target user is delivered into a target delivery locker, the server acquires contact information of the target user and sends the corresponding pickup notification to the target user.

In step 220, it is determined whether the target user picks up the parcel within standard pickup waiting time. If the target user picks up the parcel within the standard pickup waiting time, a pickup process is completed and the algorithm ends; if the target user does not pick up the parcel within the standard pickup waiting time, step 230 is executed.

After the server sends the pickup notification to the target user and waits for target pickup waiting time, the server needs to determine whether the target user picks up the parcel. If the target user completes the pickup, the algorithm ends. If the target user does not pick up the parcel within the standard pickup waiting time, step 230 is executed for further determination.

In step 230, it is determined whether monitoring time is reached. If the monitoring time is reached, step 240 is executed; and if the monitoring time is not reached, step 250 is executed.

After it is determined that the target user does not pick up the parcel within the standard pickup waiting time, it is necessary to continue to determine whether the deadline for sending the pickup reminding notification to the target user, that is, the monitoring time, is reached. If the monitoring time is reached, step 240 is executed; otherwise, step 250 is executed.

In an embodiment, if it is determined that the target user does not pick up the parcel within the standard pickup waiting time and the predicted pickup time corresponding to the target user is not stored, that is, the monitoring time cannot be acquired, the server acquires at least two default reminding time points according to a current pickup location type of the target user.

In an embodiment, different delivery lockers may have different pickup location types. For each pickup location type, the server presets at least two default reminding time points, that is, general predicted pickup time. Exemplarily, for office premises such as office buildings, the default reminding time points may be set at 8 AM from Monday to Friday or at 5 PM from Monday to Friday; the reason for this setting is to perform pickup reminding before work and before getting off work on weekdays, empty out the delivery locker grids, and increase the utilization rate of the grids at the delivery peak on Monday morning and the utilization rate of the grids on weekends. For residential locations such as residential areas or mixed commercial and residential areas, the default reminding time points may be set at 7 PM from Monday to Sunday; the reason for this setting is to perform reminding in the evening to increase the utilization rate of the available grids on the next day.

If the server sends the pickup reminding notification to the target user according to the default reminding time points, the server sends pickup reminding information to the user within the target waiting time before each default reminding time point.

In step 240, the server sends the pickup reminding notification to the target user.

After the server sends the pickup reminding notification to the target user, step 260 is executed for the next step of determination.

In step 250, it is determined whether an access control recognition entry record and/or a license plate recognition entry record are monitored. If the access control recognition entry record and/or the license plate recognition entry record is monitored, step 240 is executed; and if the access control recognition entry record and the license plate recognition entry record are not monitored, step 230 is executed.

As shown in FIG. 2B, if the target user does not pick up the parcel within the standard pickup waiting time and the monitoring time is not reached, the server controls the access control system to monitor whether the access control recognition entry record of the target user exists and controls the license plate monitoring system to monitor whether the license plate recognition entry record of the target user exists. If the access control system monitors the access control recognition entry record of the target user or the license plate monitoring system monitors the license plate recognition entry record of the target user, the server is immediately notified that the target user has entered the area where the target delivery locker is located, and after the server receives the notification, step 240 is executed immediately. At the same time, if the license plate monitoring system monitors the license plate recognition entry record, the server controls the license plate monitoring system to voice-broadcast the pickup reminding notification to the target user so that the following case is avoided: the user does not see the pickup reminding notification and miss the pickup.

In step 260, it is determined whether the target user does not pick up the parcel within cyclic waiting time. If the target user does not pick up the parcel within the cyclic waiting time, step 240 is executed; and if the target user picks up the parcel within the cyclic waiting time, the pickup is completed and the algorithm ends.

After sending the pickup reminding notification to the target user, the server needs to determine whether the target user does not pick up the parcel within the cyclic waiting time. If the target user does not pick up the parcel within the cyclic waiting time, step 240 is executed to resend the pickup reminding notification to the target user; and if the target user picks up the parcel within the cyclic waiting time, the target user completes the pickup and the algorithm ends. The cyclic waiting time refers to a time interval between sending time of two pickup reminding notifications. For example, the cyclic waiting time may be set to 24 hours or other time lengths.

In technical solutions of the embodiments of the present invention, the predicted pickup time of multiple users is generated according to the pickup behavior data of the multiple users, and in the case where the user does not pick up the parcel within the standard waiting time, the corresponding pickup reminding notification is sent to the user according to the predicted pickup time of the user and/or the monitoring result of the user in the area where the target delivery locker is located. In this manner, the following problem in the related art is solved: the pickup reminding notification is sent according to the time when the parcel is delivered into the delivery locker, causing the retention time of the parcel in the delivery locker to be too long, thereby causing the relatively low utilization rate of the delivery locker grids; and the user is effectively reminded to pick up the parcel in time and thus the utilization efficiency of the grids is improved.

### Embodiment three

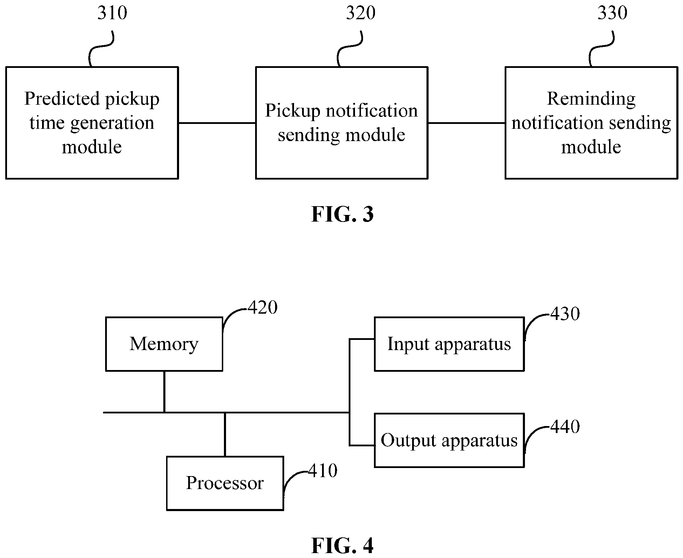

FIG. 3 is a structure diagram of a pickup reminding apparatus according to embodiment three of the present invention. As shown in FIG. 3, the pickup reminding apparatus includes a predicted pickup time generation module 310, a pickup notification sending module 320, and a reminding notification sending module 330.

The predicted pickup time generation module 310 is configured to acquire pickup behavior data of multiple users and generate predicted pickup time of the multiple users according to the pickup behavior data.

The pickup notification sending module 320 is configured to, after receiving a notification that a parcel of a target user is delivered into a target delivery locker, send a pickup notification to the target user.

The reminding notification sending module 330 is configured to, if it is determined that the target user does not pick up the parcel within standard pickup waiting time, send a corresponding pickup reminding notification to the target user according to predicted pickup time of the target user and/or a monitoring result of the target user in an area where the target delivery locker is located.

In technical solutions of the embodiments of the present invention, the predicted pickup time of multiple users is generated according to the pickup behavior data of the multiple users, and in the case where the user does not pick up the parcel within the standard waiting time, the corresponding pickup reminding notification is sent to the user according to the predicted pickup time of the user and/or the monitoring result of the user in the area where the target delivery locker is located. In this manner, the following problem in the related art is solved: the pickup reminding notification is sent according to the time when the parcel is delivered into the delivery locker, causing the retention time of the parcel in the delivery locker to be too long, thereby causing the relatively low utilization rate of the delivery locker grids; and the user is effectively reminded to pick up the parcel in time and thus the utilization efficiency of the grids is improved.

In an embodiment, the predicted pickup time generation module 310 is further configured to: preset multiple time points and add pickup time in the pickup behavior data of the multiple users to the multiple time points, respectively; and count numbers of times of pickup corresponding to the multiple time points and select one of the multiple time points corresponding to a maximum number of times of pickup as the predicted pickup time, where if the maximum number of times of pickup corresponds to multiple time points, one of the multiple time points corresponding to the maximum number of times of pickup is randomly selected as the predicted pickup time.

In an embodiment, the predicted pickup time generation module 310 may include a validity determination unit configured to determine that the selected predicted pickup time is valid in a case where the maximum number of times of pickup is greater than a threshold of times of pickup.

In an embodiment, the reminding notification sending module 330 is further configured to send an interval reminding notification according to the monitoring result of the target user in the area where the target delivery locker is located, where the monitoring result includes a result for monitoring the target user by a license plate monitoring system and/or an access control system matching the area where the target delivery locker is located.

In an embodiment, the reminding notification sending module 330 is further configured to: after the parcel is not picked up within the standard pickup waiting time, acquire the predicted pickup time of the target user and acquire monitoring time between which and the predicted pickup time target waiting time exists; if an access control recognition entry record and/or a license plate recognition entry record of the target user is monitored before the monitoring time, send the pickup reminding notification to the target user when the recognition record is monitored; or if the access control recognition entry record and/or the license plate recognition entry record of the target user is not monitored before the monitoring time, send the pickup reminding notification to the target user at the monitoring time.

In an embodiment, the reminding notification sending module 330 further includes a voice-broadcasting reminding unit configured to voice-broadcast the pickup reminding notification through the license plate monitoring system in the case where the license plate recognition entry record is monitored.

In an embodiment, the pickup notification sending module 320 further includes a default reminding time acquisition unit and a reminding information sending unit, the default reminding time acquisition unit is configured to acquire at least two default reminding time points according to a current pickup location type of the user if it is determined that the target user does not pick up the parcel within the standard pickup waiting time and the predicted pickup time corresponding to the target user is not stored; and the reminding information sending unit is configured to send pickup reminding information to the user within the target waiting time before each of the at least two default reminding time points.

The pickup reminding apparatus provided by embodiments of the present invention may execute the pickup reminding method of any one of embodiments of the present application and has functional modules and beneficial effects corresponding to the executed method.

### Embodiment four

Referring to FIG. 4, FIG. 4 is a structure diagram of a computer device according to embodiment four of the present invention. As shown in FIG. 4, the device includes a processor 410, a memory 420, an input apparatus 430 and an output apparatus 440. The number of processors 410 in the device may be one or more, and one processor 410 is used as an example in FIG. 4. The processor 410, the memory 420, the input apparatus 430 and the output apparatus 440 in the device may be connected through a bus or in other manners. In FIG. 4, the connection through the bus is used as an example.

As a computer-readable storage medium, the memory 420 may be configured to store software programs, computer-executable programs, and modules, such as program instructions/modules corresponding to the pickup reminding method in embodiments of the present invention (for example, the predicted pickup time generation module 310, the pickup notification sending module 320 and the reminding notification sending module 330 in the pickup reminding apparatus). The processor 410 executes software programs, instructions, and modules stored in the memory 420 to perform various functional applications and data processing of the apparatus, that is, to implement the preceding pickup reminding method.

The memory 420 may mainly include a program storage region and a data storage region. The program storage region may store an operating system and at least one application required for functions. The data storage region may store data and the like created according to the use of the terminal. In addition, the memory 420 may include a high-speed random access memory and may also include a non-volatile memory such as at least one disk memory, flash memory, or other non-volatile solid-state memories. In some examples, the memory 420 may further include memories located remotely relative to the processor 410 and these remote memories may be connected to the apparatus via networks. Examples of the preceding networks include, and are not limited to, the Internet, an intranet, a local area network, a mobile communication network and a combination thereof.

The input apparatus 430 may be configured to receive input digital or character information and generate key signal input related to user settings and function control of the apparatus. The output apparatus 440 may include a display screen and other display devices.

### Embodiment five

Embodiment five of the present invention provides a computer-readable storage medium storing computer instructions, where the computer instructions are configured to, when executed by a processor, implement the pickup reminding method. The pickup reminding method includes steps described below.

Pickup behavior data of multiple users is acquired and predicted pickup time of the multiple users is generated according to the pickup behavior data.

After a notification that a parcel of a target user is delivered into a target delivery locker is received, a pickup notification is sent to the target user.

If it is determined that the target user does not pick up the parcel within standard pickup waiting time, a corresponding pickup reminding notification is sent to the target user according to predicted pickup time of the target user and/or a monitoring result of the target user in an area where the target delivery locker is located.

In the computer-readable storage medium provided in embodiments of the present invention, the computer instructions implement not only the preceding method operations but also related operations in the pickup reminding method of any one of embodiments of the present application.

From the preceding description of embodiments, it will be apparent to those skilled in the art that the present application may be implemented by means of software and necessary general-purpose hardware or may of course be implemented by hardware, but in many cases the former is a preferred embodiment. Based on this understanding, the technical solutions provided by the present application substantially, or the part contributing to the related art, may be embodied in the form of a software product. The computer software product is stored in the computer-readable storage medium such as a computer floppy disk, a read-only memory (ROM), a random-access memory (RAM), a flash, a hard disk, or an optical disk and includes several instructions for enabling a computer device (which may be a personal computer, a server, or a network device) to execute the method according to each embodiment of the present application.

It is to be noted that units and modules included in the embodiment of the pickup reminding apparatus are just divided according to functional logic but are not limited to such division, as long as the corresponding functions can be implemented. In addition, the specific names of the functional units are just used for distinguishing between each other and are not intended to limit the scope of the present application.

## Claims

1. A pickup reminding method, comprising:
acquiring pickup behavior data of a plurality of users and generating predicted pickup time of the plurality of users according to the pickup behavior data;
after receiving a notification that a parcel of a target user is delivered into a target delivery locker, sending a pickup notification to the target user; and
in response to determining that the target user does not pick up the parcel within standard pickup waiting time, sending a pickup reminding notification to the target user according to at least one of: predicted pickup time of the target user and a monitoring result of the target user in an area where the target delivery locker is located.

2. The method of claim 1, wherein acquiring the pickup behavior data of the plurality of users and generating the predicted pickup time of the plurality of users according to the pickup behavior data comprises:
presetting a plurality of time points and adding a plurality of pickup time in the pickup behavior data of the plurality of users to the plurality of time points, respectively; and
counting numbers of times of pickup corresponding to the plurality of time points and selecting one of the plurality of time points corresponding to a maximum number of times of pickup as the predicted pickup time;
wherein in a case where the maximum number of times of pickup corresponds to a plurality of time points, one of the plurality of time points corresponding to the maximum number of times of pickup is randomly selected as the predicted pickup time.

3. The method of claim 2, wherein selecting the one of the plurality of time points corresponding to the maximum number of times of pickup as the predicted pickup time comprises:
in a case where the maximum number of times of pickup is greater than a threshold of times of pickup, determining that the selected predicted pickup time is valid.

4. The method of any one of claims 1 to 3, wherein the monitoring result of the target user in the area where the target delivery locker is located comprises:
a result for monitoring the target user by at least one of a license plate monitoring system and an access control system matching the area where the target delivery locker is located.

5. The method of claim 4, wherein sending the corresponding pickup reminding notification to the target user according to at least one of: the predicted pickup time of the target user and the monitoring result of the target user in the area where the target delivery locker is located comprises:
after the parcel is not picked up within the standard pickup waiting time, acquiring the predicted pickup time of the target user and acquiring monitoring time between which and the predicted pickup time target waiting time exists;
in a case where at least one of an access control recognition entry record and a license plate recognition entry record of the target user is monitored before the monitoring time, sending the pickup reminding notification to the target user; or
in a case where an access control recognition entry record and a license plate recognition entry record of the target user are not monitored before the monitoring time, sending the pickup reminding notification to the target user at the monitoring time.

6. The method of claim 5, wherein in the case where the license plate recognition entry record of the target user is monitored before the monitoring time, sending the pickup reminding notification to the target user further comprises:
in the case where the license plate recognition entry record is monitored, voice-broadcasting the pickup reminding notification through the license plate monitoring system.

7. The method of claim 1, wherein after sending the pickup notification to the target user after receiving the notification that the parcel of the target user is delivered into the target delivery locker, the method further comprises:
in response to determining that the target user does not pick up the parcel within the standard pickup waiting time and the predicted pickup time corresponding to the target user is not stored, acquiring at least two default reminding time points according to a current pickup location type of the user; and
sending pickup reminding information to the user within target waiting time before any one of the at least two default reminding time points.

8. A pickup reminding apparatus, comprising:
a predicted pickup time generation module, which is configured to acquire pickup behavior data of a plurality of users and generate predicted pickup time of the plurality of users according to the pickup behavior data;
a pickup notification sending module, which is configured to, after receiving a notification that a parcel of a target user is delivered into a target delivery locker, send a pickup notification to the target user; and
a reminding notification sending module, which is configured to, in response to determining that the target user does not pick up the parcel within standard pickup waiting time, send a corresponding pickup reminding notification to the target user according to at least one of: predicted pickup time of the target user and a monitoring result of the target user in an area where the target delivery locker is located.

9. The apparatus of claim 8, wherein the predicted pickup time generation module is further configured to:
preset a plurality of time points and add pickup time in the pickup behavior data of the plurality of users to the plurality of time points, respectively; and
count numbers of times of pickup corresponding to the plurality of time points and select one of the plurality of time points corresponding to a maximum number of times of pickup as the predicted pickup time;
wherein in a case where the maximum number of times of pickup corresponds to a plurality of time points, one of the plurality of time points corresponding to the maximum number of times of pickup is randomly selected as the predicted pickup time.

10. The apparatus of claim 9, wherein the predicted pickup time generation module comprises:
a validity determination unit, which is configured to, in a case where the maximum number of times of pickup is greater than a threshold of times of pickup, determine that the selected predicted pickup time is valid.

11. The apparatus of any one of claims 8 to 10, wherein the reminding notification sending module is further configured to send an interval reminding notification according to the monitoring result of the target user in the area where the target delivery locker is located,
wherein the monitoring result comprises a result for monitoring the target user by at least one of a license plate monitoring system and an access control system matching the area where the target delivery locker is located.

12. The apparatus of any one of claim 11, wherein the reminding notification sending module is further configured to:
after the parcel is not picked up within the standard pickup waiting time, acquire the predicted pickup time of the target user and acquire monitoring time between which and the predicted pickup time target waiting time exists; in a case where at least one of an access control recognition entry record and a license plate recognition entry record of the target user is monitored before the monitoring time, send the pickup reminding notification to the target user; or in a case where the access control recognition entry record and the license plate recognition entry record of the target user are not monitored before the monitoring time, send the pickup reminding notification to the target user at the monitoring time.

13. The apparatus of claim 12, wherein the reminding notification sending module further comprises:
a voice-broadcasting reminding unit, which is configured to, in the case where the license plate recognition entry record is monitored, voice-broadcast the pickup reminding notification through the license plate monitoring system.

14. A computer device, comprising a memory, a processor, and a computer program stored in the memory and executable by the processor; wherein the processor executes the computer program to implement the pickup reminding method of any one of claims 1 to 7.

15. A computer-readable storage medium storing a computer program, wherein the computer program is configured to, when executed by a processor, implement the pickup reminding method of any one of claims 1 to 7.
